# DEMANDE DE BREVET EUROPEEN

(11) **EP 2 428 923 A1**
(43) Date de publication de la demande: **14.03.2012**
(21) Numéro de dépôt: 11181314.3
(22) Date de dépôt: 14.09.2011
(51) Int. Cl.: G06Q 20/00, G07F 7/10

(54) **Procédé d'identification de support à microcircuit mis en oeuvre lors de la communication entre un terminal bancaire et ce support**

(30) Priorité: 14.09.2010 FR 1057340
(71) Demandeur: CB Investissements, 75001 Paris (FR)
(72) Inventeur: Verecque, Ludovic, 75015 Paris (FR); Meggle, Romain, 93230 Romainville (FR)
(74) Mandataire: Cabinet Plasseraud

(57) **Abrégé**

Le procédé comprend les étapes de: sélection (48) d'une application partagée par le terminal et le support de paiement; initialisation (50) de l'application, l'initialisation (50) comportant la transmission depuis le support de paiement vers le terminal d'au moins un pointeur vers un enregistrement d'un fichier élémentaire; et lecture (52) des données de chaque enregistrement pointé. Un premier pointeur vers un enregistrement d'un premier fichier élémentaire contenant un numéro de compte primaire PAN est transmis au terminal dans l'initialisation d'une application de paiement. Un deuxième pointeur vers un enregistrement d'un deuxième fichier élémentaire contenant un identifiant de support de paiement différent du numéro de compte primaire PAN est en outre transmis au terminal dans l'initialisation de l'application de paiement.

## Description

La présente invention concerne un procédé d'identification de support à microcircuit (par exemple une carte à puce) utilisable lors de la communication entre un terminal bancaire et ce support de paiement à puce correspondant.

L'invention concerne notamment le domaine des cartes bancaires de type EMV (Europay, Mastercard, Visa).

La spécification EMV (Europay, Mastercard, Visa) est une norme de paiement internationale permettant de réaliser des transactions de débit/crédit.

Le but de cette norme de paiement est d'assurer l'interopérabilité des paiements nationaux ou internationaux effectués par carte bancaire tout en assurant un niveau de sécurité suffisant entre une carte et un terminal conformes aux spécifications de cette norme.

La spécification EMV est référencée IS07816. Elle décrit une application de paiement dans laquelle le choix d'accepter une transaction ou de la traiter en ligne ou hors ligne ne dépend pas que du terminal mais aussi de la carte de paiement pendant la transaction. De ce fait l'acquéreur, c'est-à-dire la banque du commerçant, peut adapter ses mesures anti fraude au niveau de l'application du terminal et l'émetteur, c'est-à-dire la banque du porteur de la carte, peut faire de même au niveau de la carte.

Le procédé de communication entre un terminal et un support de paiement à puce, selon la spécification EMV, comprend les étapes de :
- sélection d'au moins une application partagée par le terminal et le support de paiement ;
- initialisation de l'application sélectionnée, l'initialisation comportant la transmission depuis le support de paiement vers le terminal d'au moins un pointeur vers un enregistrement d'un fichier élémentaire mémorisé dans la puce du support de paiement ;
- lecture dans le terminal des données de chaque enregistrement pointé ; et
- poursuite de l'application sélectionnée en utilisant une partie au moins des données lues.

Un pointeur vers un enregistrement d'un fichier élémentaire contenant un numéro de compte primaire PAN est transmis au terminal dans l'initialisation d'une application de paiement.

Le PAN (« *Primary Account Number »)* est généralement également codé dans une piste magnétique de la carte de paiement et/ou estampé sur le support plastique de la carte.

Le PAN est également utilisé comme identifiant dans des transactions de vente à distance, en particulier utilisant le réseau internet.

Il est aussi utilisé comme identifiant dans une grande variété d'applications connexes au paiement par carte mais différentes du paiement par carte. Par exemple, un porteur ayant acheté par Internet des titres de transport ou des billets de spectacle peut se voir proposer un retrait sur une borne où il est invité à présenter sa carte. Une telle borne lit le PAN dans la puce de la carte pour valider que ces titres ou billets peuvent être délivrés au porteur.

La carte à puce peut également servir de support pour d'autres types de services, par exemple en matière de crédit, de fidélisation de clientèle, d'opérations promotionnelles, etc. La fourniture de tels services suppose une lecture du PAN dans la carte. Dans certains cas, des banques développent des partenariats avec des organismes tiers pour offrir des services adaptés à des personnes rattachées à ces organismes. Là aussi, une identification du porteur doit intervenir et c'est typiquement le PAN qui est utilisé à cette fin.

Le développement des services et applications autres que de paiement utilisant des cartes de paiement pose le problème de la confidentialité du PAN. Les entités gérant de tels services ou applications se trouvent en possession de listes de PAN dont la dissémination présente des risques financiers, particulièrement au regard de l'essor du commerce en ligne. Ces entités doivent s'entourer de précautions et être capables d'en justifier auprès des organismes bancaires et/ou des autorités de contrôle, étant donné que la protection du PAN, est une exigence réglementaire.

Cette contrainte freine le développement de tels services et applications. Il apparaît souhaitable de s'en affranchir ou au moins d'en réduire l'incidence.

A cet effet, la présente invention vise un procédé d'identification de support à microcircuit mis en oeuvre lors de la communication entre un terminal bancaire et ce support comprenant les étapes indiquées ci-dessus.

Un premier pointeur vers un enregistrement d'un premier fichier élémentaire contenant un numéro de compte primaire PAN est transmis au terminal dans l'initialisation d'une application de paiement.

Un deuxième pointeur vers un enregistrement d'un deuxième fichier élémentaire contenant un identifiant de support de paiement différent du numéro de compte primaire PAN est en outre transmis au terminal dans l'initialisation de ladite application de paiement.

Ainsi, l'invention permet de résoudre le problème de sécurité lié à l'utilisation exclusive du numéro de compte primaire PAN en proposant d'inscrire dans la puce du support de paiement un identifiant différent du PAN. Cet identifiant est lu systématiquement par le terminal lors d'une transaction de paiement.

Ainsi, la présente invention permet, pour les supports de paiement, de disposer d'un deuxième identifiant moins sensible que le PAN car il n'est pas directement lié à la transaction de paiement.

Divers intervenants (commerçants, banques, organismes partenaires, etc.) pourront utiliser ce deuxième identifiant pour gérer une grande variété de services ou applications distinctes du paiement mais souvent couplés à des opérations de paiement. Ils pourront le faire sans avoir à conserver des listes de PAN qui constituent des informations sensibles requérant des mesures de sécurité contraignantes.

Les terminaux, auxquels sont présentées des cartes munies du PAN et du deuxième identifiant systématiquement fourni à l'initialisation d'une application de paiement, peuvent ou non effectuer un traitement sur (ou exploiter) le deuxième identifiant. Ils l'exploitent typiquement si un service différent du paiement est mis en oeuvre. Il est ainsi possible de développer de nouveaux services couplés à des opérations de paiement en adaptant le logiciel de certains terminaux et/ou des systèmes informatiques avec lesquels ils coopèrent. Si la transaction entre la carte et le terminal se limite à un simple paiement, le terminal reçoit le deuxième identifiant mais ne l'exploite pas (il n'en fait aucun usage). Les cartes munies des deux identifiants restent notamment compatibles avec tout le parc des terminaux existants.

Lors de l'initialisation, la carte ne fait pas de distinction entre un terminal de paiement qui exploite le deuxième identifiant et un autre terminal qui ne l'exploite pas. Elle fournit automatiquement le deuxième identifiant sans que ceci requière un dialogue spécifique qui impliquerait de modifier les terminaux.

Aucune modification des normes de paiement (telles qu'EMV) n'est nécessaire. Il suffit de mettre en circulation de nouvelles cartes, ou plus généralement de nouveaux supports de paiement munis des deux identifiants avec les pointeurs associés.

Avantageusement, les enregistrements désignés par les premier et deuxième pointeurs ont un format de type étiquette-longueur-valeur, une étiquette prédéterminée étant réservée au 2^{ème} identifiant de support de paiement qui est différent du PAN, et qui sera nommé 2IdS ci-après.

Il s'agit typiquement du format BER-TLV (« *Basic Encoding Rules ― Tag Length Value* ») défini dans le livre 2 (« *Book 2* ») de la spécification EMV version 4.1. Selon ce format, la valeur V de l'identifiant est précédée d'une étiquette T (« *Tag* ») l'identifiant de manière unique et de sa longueur L pouvant varier de 7 à 32 octets.

Dans une réalisation, l'étiquette prédéterminée peut être inscrite dans une liste de données de génération d'un certificat de transaction de l'application de paiement.

Par exemple, selon la spécification EMV, les listes de données CDOL1 (« *Card Data Object List 1* ») et CDOL2 (« *Card Data Object List 2* ») sont utilisées, pour générer un certificat de transaction respectivement pour un paiement hors ligne et pour un paiement en ligne.

L'inscription de l'étiquette de l'identifiant dans la liste de données CDOL1 permet au terminal de remonter l'identifiant à l'émetteur du support de paiement lors d'une demande d'autorisation.

L'inscription de l'étiquette de l'identifiant dans la liste de données CDOL2 permet au terminal de remonter l'identifiant à l'émetteur du support de paiement lors d'une demande d'autorisation et à l'acquéreur de collecter cet identifiant afin que la transaction de paiement puisse être compensée. Ainsi, l'émetteur et/ou l'acquéreur peuvent offrir certains services au porteur de la carte ou à un tiers. Un exemple de tels services est l'attribution de points dans le cadre d'un programme de fidélité.

Selon une réalisation, le premier fichier élémentaire contenant le PAN et le deuxième fichier élémentaire contenant le deuxième identifiant sont distincts. Ceci permet d'éviter une manipulation du PAN et améliore ainsi la sécurité des transactions.

Avantageusement, le pointeur vers l'enregistrement du deuxième fichier élémentaire est transmis au terminal dans l'initialisation d'une application différente d'une application de paiement.

Ainsi, l'identifiant selon l'invention peut-être lu sur le support de paiement en dehors de toute transaction de paiement par exemple au moyen d'une commande de lecture. Cette caractéristique permet d'offrir des services supplémentaires au porteur du support de paiement ou à des tiers, comme, à titre d'exemples, le contrôle d'accès, ou le retrait d'avantages dans le cadre d'un système de fidélité fonctionnant avec des points.

Dans le cas d'une application différente d'un paiement, la lecture du PAN est optionnelle et il n'est pas nécessaire de le stocker.

Selon une autre réalisation, l'identifiant est associé à l'identité de l'utilisateur du support de paiement au niveau de l'organisme émetteur dudit support de paiement.

Ceci permet à l'émetteur du support de paiement de mettre en oeuvre un système d'autorisation permettant d'offrir ses services.

Avantageusement, l'identifiant 2IdS peut être un code de type GSRN (« *Global Service Relation Number* ») ou SGTIN (*« Serialized Global Trade Item Number »*). Un tel identifiant est basé sur un standard global, maintenu et largement diffusé. Il s'agit également d'un identifiant explicite, lisible simplement, compatible avec la technologie EMV et qui peut être personnalisé facilement dans une puce d'un support de paiement.

En variante, l'identifiant est un numéro de téléphone, par exemple un numéro de téléphone mobile du porteur du support de paiement ou tout autre chaîne de caractères alphanumérique sérialisée permettant d'identifier l'établissement émetteur du support de paiement à microcircuit.

L'invention vise également un support de paiement à puce, comprenant une interface de communication avec un terminal, et une mémoire où sont stockées des informations respectives concernant au moins une application supportée par le support de paiement,
dans lequel les informations stockées pour une application comprennent un fichier de répertoire d'application (notamment de type ADF) et des fichiers élémentaires (de type EF) contenant des enregistrements,
dans lequel le fichier de répertoire d'une application contient un localisateur de fichiers d'application (notamment de type AFL) pointant vers au moins un enregistrement d'un fichier élémentaire, le localisateur de fichiers d'application étant transmis via l'interface de communication à un terminal partageant ladite application lors d'une initialisation de ladite application afin que le terminal lise chaque enregistrement pointé,
dans lequel le support de paiement supporte une application de paiement pour laquelle le localisateur de fichiers d'application pointe d'une part vers un enregistrement d'un premier fichier élémentaire contenant un numéro de compte primaire PAN et d'autre part vers un enregistrement d'un deuxième fichier élémentaire contenant un identifiant de support de paiement 2IdS différent du numéro de compte primaire PAN.

D'autres caractéristiques et avantages de l'invention apparaîtront à l'examen de la description détaillée ci-après, et des dessins annexés sur lesquels :
- la figure 1 est un schéma synoptique illustrant la structure d'un système mettant en oeuvre le procédé de communication selon l'invention ;
- la figure 2 est un schéma synoptique illustrant la structure d'un support de paiement selon l'invention ; et
- la figure 3 est un organigramme illustrant le fonctionnement d'un procédé de communication selon l'invention.

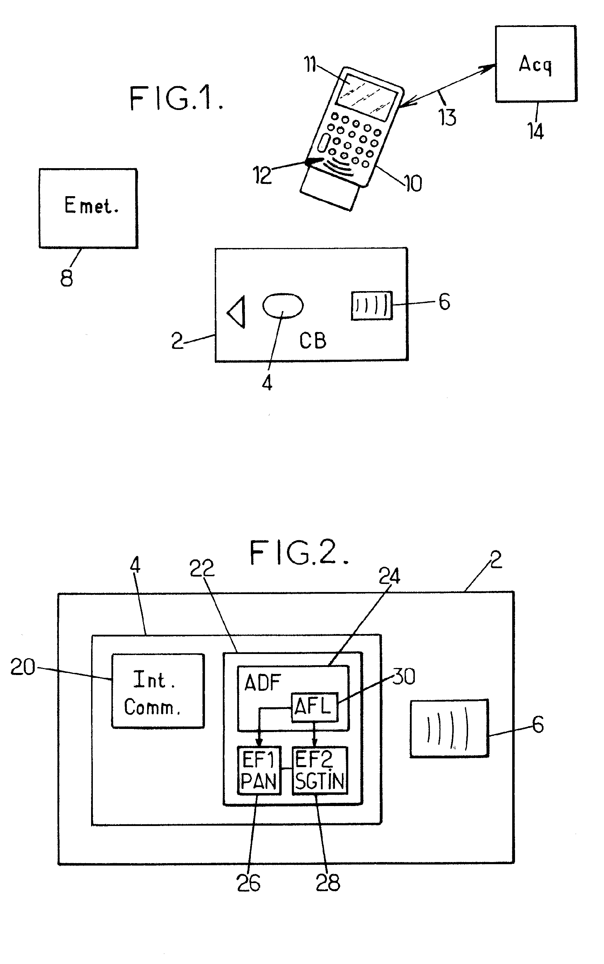

La figure 1 représente un système mettant en oeuvre le procédé de communication selon l'invention. Ce système comprend un support de paiement à puce 2.

Selon un mode de réalisation préféré de l'invention, le support de paiement 2 est une carte bancaire de type EMV.

Le support de paiement 2 dont la structure sera détaillée en référence à la figure 2, comprend une puce qui s'interface avec une vignette 4 qui permet de communiquer en mode filaire ou « contact ».

Avantageusement, le support de paiement 2 peut comprendre également des moyens de communication 6 sans contact, par exemple une antenne pour la transmission de signaux hertziens.

Le support de paiement 2 est émis par un organisme émetteur 8, notamment un organisme bancaire.

L'utilisateur du support de paiement 2 utilise ce support notamment pour régler des achats auprès d'un commerçant ou pour effectuer des retraits d'argent aux bornes d'un distributeur automatique de billets. Dans toute la suite de cette description, une transaction de paiement indique à la fois un paiement ou un retrait d'argent.

Pour effectuer cette transaction de paiement, l'utilisateur du support 2 met en communication ce support avec un terminal 10 situé chez le commerçant dans le cas du règlement d'achats, par le biais de la vignette 4 (interface « contact ») ou de l'antenne 6 (interface « sans-contact »). Dans le cas du retrait d'argent, le terminal 10 est situé dans le distributeur automatique de billets.

Avantageusement, le terminal 10 comprend des moyens d'affichage 11 et des moyens de communication sans contact 12.

Le terminal 10 est raccordé par l'intermédiaire d'une liaison de transmission d'informations 13 à un organisme acquéreur 14. L'organisme acquéreur 14 est par exemple la banque du commerçant ou bien la banque responsable du distributeur automatique de billets.

La figure 2 illustre la structure du support de paiement 2.

La puce 4 du support de paiement 2 comprend une interface de communication 20 avec le terminal 10.

Elle comprend également une mémoire 22 dans laquelle sont stockées des informations concernant au moins une application supportée par le support de paiement 2.

Les informations stockées dans la mémoire 22 pour une application donnée comprennent un fichier de répertoire d'application (« *Application Directory File* ») ADF 24 et des fichiers élémentaires (« *Elementary Files* ») EF1 26, EF2 28.

Le fichier ADF 24 contient un localisateur de fichier d'application (« *Application File Locator* ») AFL 30.

Le localisateur AFL 30 pointe vers au moins un enregistrement d'un fichier élémentaire. Dans le cas de la spécification EMV, un tel enregistrement a un format de type étiquette-longueur-valeur BER-TLV. Selon l'invention, le localisateur AFL 30 pointe d'une part vers un enregistrement d'un premier fichier élémentaire EF1 26 contenant un numéro de compte primaire PAN et d'autre part vers un enregistrement d'un deuxième fichier élémentaire EF2 28 contenant un identifiant 2IdS de support de paiement différent du numéro du compte primaire PAN. Le localisateur AFL 30 peut pointer vers d'autres fichiers élémentaires EF qui contiendront des données spécifiées par la spécification EMV.

Selon le mode de réalisation préféré, représenté sur la figure 2, le premier fichier élémentaire EF1 26 et le deuxième fichier élémentaire EF2 28 sont distincts.

Cependant, il est envisageable en variante, d'avoir les deux fichiers élémentaires confondus, le PAN et l'identifiant différent du PAN étant inscrits à des enregistrements (ou emplacements) différents d'un même fichier élémentaire.

Dans la suite de la description, le PAN est appelé premier identifiant et l'identifiant différent du PAN est appelé deuxième identifiant 2IdS.

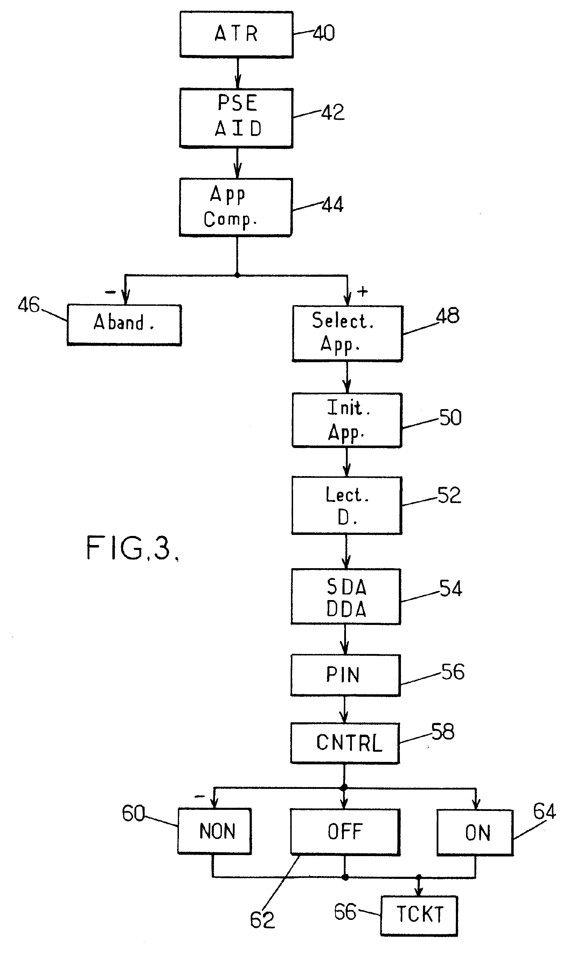

La figure 3 est un organigramme représentant le fonctionnement du procédé de communication entre le terminal 10 et le support de paiement 2 selon l'invention, plus particulièrement lorsque le support de paiement 2 est une carte bancaire EMV.

Lorsque le porteur du support de paiement 2 souhaite utiliser ce support pour effectuer une transaction, il introduit ce support 2 dans le terminal 10. En variante, lorsque le support 2 et le terminal 10 comprennent les moyens de communication sans contact 6, 12 respectivement, le porteur présente le support 2 devant le terminal 10.

A l'étape 40, le terminal 10 analyse le type de support de paiement 2. Pour cela, le terminal 10 lit, au niveau de la puce 4 de la carte 2, une donnée dite de réponse à une réinitialisation ATR (« *Answer To Reset* »). Il s'agit d'une séquence d'octets sortie par la carte 2 après que le terminal 10 a réinitialisé électriquement la carte 2. Cette donnée ATR indique au terminal 10 le type et les capacités de communication de la carte 2.

A l'étape 42, le terminal 10 établit la liste des applications présentes dans la carte 2.

Pour cela, il utilise de préférence la méthode dite d'Environnement de système de paiement PSE (« *Payment System Environment* »).

En variante, lorsque la méthode PSE n'est pas supportée par le terminal 10, celui-ci recherche des identifiants d'applications AID (« *Application IDentifiers* ») dans la puce 4.

A l'étape 44, le terminal 10 réalise une comparaison des applications disponibles dans la carte 2 avec ses propres applications. S'il n'y a aucune application commune entre la carte 2 et le terminal 10, la transaction est abandonnée à l'étape 46.

S'il y a au moins une application commune entre le terminal 10 et la carte 2, le terminal 10 sélectionne à l'étape 48, une application partagée par le terminal 10 et la carte 2 en fonction d'indices de priorité ou du choix du porteur de la carte.

De préférence, pour chaque application partagée, le terminal 10 lit une table de priorité dans la puce 4. En cas d'égalité de priorité, le terminal 10 propose au porteur de la carte 2 de choisir l'application souhaitée dans un menu affiché sur les moyens d'affichage 11, par exemple.

A l'étape 50, le terminal 10 et la carte 2, initialisent l'application sélectionnée dans la carte 2 par une commande dite GPO (« *Get Processing Options* »).

Lors de cette étape d'initialisation 50, la carte 2 transmet vers le terminal 10 au moins un pointeur vers un enregistrement d'un fichier élémentaire, mémorisé dans la puce 4 de la carte 2.

Plus particulièrement, lorsque l'application sélectionnée à l'étape 48 est une application de paiement, la carte 2 transmet vers le terminal 10, un premier pointeur vers un enregistrement du premier fichier élémentaire 26 contenant le PAN qui est premier identifiant de la carte 2.

Selon l'invention, à l'étape d'initialisation 50, la carte 2 transmet également vers le terminal 10, un deuxième pointeur vers un enregistrement du deuxième fichier élémentaire 28 contenant le deuxième identifiant 2IdS. Les données de cet enregistrement, notamment le deuxième identifiant 2IdS, sont lues par le terminal 10 à une étape 52.

Le deuxième identifiant 2IdS est attribué de manière unique à chaque carte. Il a un format numérique. A titre d'exemple, cet identifiant est un code GSRN ou SGTIN. Ce code GSRN ou SGTIN est défini par l'organisation GS1 qui propose des standards comme des codes à barres GTIN, des étiquettes radiofréquence, etc. Un code SGTIN est un code à barre GTIN suivi par un numéro de série.

En variante, le deuxième identifiant 2IdS peut être choisi parmi les numéros de téléphone de l'utilisateur, par exemple son numéro de téléphone mobile.

L'enregistrement du deuxième fichier élémentaire 28 comprenant le deuxième identifiant 2IdS a un format de type étiquette-longueur-valeur BER-TLV, une étiquette prédéterminée étant réservée à ce deuxième identifiant 2IdS de la carte 2.

Grâce à cette personnalisation du deuxième identifiant 2IdS dans l'application de paiement EMV de la carte 2, ce deuxième identifiant 2IdS est lu systématiquement par le terminal 10 lors d'une transaction de paiement ou de retrait d'argent.

Selon un mode de réalisation préféré de l'invention, lors de l'étape 50, le pointeur vers l'enregistrement du deuxième fichier élémentaire 28 contenant le deuxième identifiant 2IdS est également transmis de la carte 2 vers le terminal 10 même si l'application sélectionnée n'est pas une application de paiement.

Avantageusement, en dehors d'une application de paiement, le deuxième identifiant 2IdS peut être lu par le terminal 10 à l'étape 52 au moyen d'une commande de lecture, telle que la commande *« ReadRecord »* spécifiée dans le Livre 3 de la spécification EMV, version 4.1.

Dans ce dernier cas différent du paiement, la transmission du premier pointeur vers l'enregistrement du premier fichier élémentaire contenant le premier identifiant (PAN) est optionnelle. Elle est laissée au choix de l'émetteur et/ou de l'acquéreur.

A l'étape 54, le terminal 10 authentifie la carte 2 soit de manière statique SDA (« *Static Data Authentication* ») ou dynamique DDA (« *Dynamic Data Autentication* »).

A l'étape 56, le terminal 10 authentifie le porteur de la carte 2. Pour cela, le terminal 10 invite le porteur par un affichage sur les moyens d'affichage 11 à saisir son code PIN (« *Personal Identification Number* »). Le terminal 10 contrôle le nombre d'essais de saisie du code PIN en cas d'erreur du porteur.

A l'étape 58, le terminal 10 effectue diverses opérations de contrôle regroupées sous le terme anglais de *« Terminal Risk Management* ». Il s'agit notamment du contrôle des seuils de paiement, du contrôle des seuils bas et haut sur les cumuls des paiements, appel aléatoire, liste noire etc.

Suite à ces contrôles, le terminal 10 décide soit de rejeter la transaction à l'étape 60, ou bien de la traiter en hors-ligne à l'étape 62 ou en ligne à l'étape 64.

Dans le cas du rejet à l'étape 60, le terminal 10 demande à la carte 2 de générer un cryptogramme d'authentification d'application AAC (*« Application Authentication Cryptogram* »). Le ticket 66 (figure 3) est également émis dans ce cas.

Dans le cas du traitement hors ligne à l'étape 62, le terminal 10 peut demander à la carte 2 de générer un certificat de transaction TC (« *Transaction Certificate* »).

Dans le cas du traitement en ligne à l'étape 64, le terminal 10 demande à la carte 2 de générer un cryptogramme de requête d'autorisation ARQC (« *Authorization ReQuest Cryptogram* »).

La carte 2 réalise alors une analyse d'application de carte (« *Card Application Analysis* ») et répond au terminal 10 pour confirmer selon le cas, le rejet, le traitement hors ligne ou le traitement en ligne.

Dans le cas du traitement hors ligne en 62, la carte 2 génère un certificat de transaction TC. Ce certificat de transaction est enregistré dans le terminal 10 au niveau d'un journal de transactions qui est envoyé régulièrement vers les organismes émetteurs des cartes ayant préalablement effectué des transactions hors ligne avec le terminal .

Avantageusement, l'étiquette réservée au deuxième identifiant 2IdS est inscrite dans la liste de données CDOL1. Ainsi, ce deuxième identifiant 2IdS pourra ainsi faire partie des éléments remontés dans le but de calculer du certificat de transaction remonté vers l'organisme émetteur 8 et, le cas échéant, de procéder au traitement en ligne 64.

Dans le cas du traitement en ligne en 64, le terminal 10 envoie une demande d'autorisation à l'organisme émetteur 8 de la carte 2. Cette demande d'autorisation comprend notamment le cryptogramme ARQC généré par la carte 2.

L'organisme émetteur 8 authentifie la carte 2 à l'aide du cryptogramme ARQC en acceptant ou en refusant la transaction.

La réponse à la demande d'autorisation peut comporter une suite de programmes, dite *« script* », que le terminal 10 transmet à la carte sous forme d'unités de données de protocole application APDU (*« Application Protocol Data Units* ») successives.

La réponse contient un élément d'authentification de l'organisme émetteur 8, notamment un cryptogramme de réponse d'autorisation ARPC (*« Authorization ResPonse Cryptogram* »).

Selon un mode de réalisation de l'invention, l'étiquette du deuxième identifiant 2IdS est inscrite sur la liste de données CDOL 2. Cette liste de données remonte dans le certificat de transaction, vers l'organisme acquéreur 14. L'organisme acquéreur 14 pourra ainsi compenser la transaction de paiement.

Si l'organisme acquéreur 14 le souhaite ou s'il est paramétré en conséquence, le terminal 10 fournit suite à une transaction de paiement un service supplémentaire à cet organisme acquéreur, tel par exemple un enregistrement du deuxième identifiant 2IdS dans un journal de caisse en remplacement du PAN. Le terminal 10 ainsi paramétré peut fournir également un service au porteur de la carte 2, par exemple pour l'attribution de coupons de réduction ou à un tiers. Autre exemple, le terminal 10 ainsi paramétré peut aussi fournir un identifiant pour un prestataire informatique en charge de dématérialiser la facture consécutive à l'achat.

L'inscription de l'étiquette réservée au deuxième identifiant 2IdS dans les listes CDOL1 et/ou CDOL2 permet ainsi d'adresser ce deuxième identifiant 2IdS à l'organisme émetteur 8 pendant ou après une transaction de paiement. De la sorte, l'organisme émetteur 8 peut offrir un service au porteur de la carte 2 comme une attribution de points, dans un schéma de fidélité ou à un tiers.

Avantageusement, l'identité du porteur de la carte 2 est associée au deuxième identifiant 2IdS par l'organisme émetteur 8 de la carte 2 qui peut choisir de mettre en oeuvre un système d'autorisation permettant d'offrir ses services.

A l'étape 66, un ticket client et un ticket commerçant sont imprimés. Ces tickets contiennent des informations sur le type de la transaction, par exemple EMV, sur la carte 2, par exemple à puce ou à piste magnétique, et sur le caractère en ligne ou hors ligne de la transaction.

Ainsi, l'invention offre, grâce au deuxième identifiant 2IdS, une alternative au PAN pour identifier les supports de paiement à puce. Ce deuxième identifiant 2IdS permet un meilleur suivi de la qualité des cartes bancaires et une maîtrise du parc de cartes pour mieux lutter contre la fraude.

Grâce à l'invention, les personnes gérant des services autres que de paiement utilisant des cartes de paiement n'ont plus à gérer des listes de PAN dont elles doivent assurer la protection. Elles possèdent dans leurs bases de données uniquement des listes de deuxièmes identifiants, de nature beaucoup moins sensibles que les PAN car ils ne permettent pas d'effectuer des paiements.

De plus, ce deuxième identifiant 2IdS est facilement interopérable car il est aisément partageable entre différents fournisseurs d'applications dans le cadre de cartes multi-applications. L'interopérabilité est accrue si l'identifiant 2IdS est codé selon un standard largement diffusé tels que ceux de GS1 (SGTIN ou GSRN).

## Revendications

1. Procédé de communication entre un terminal (10) et un support de paiement (2) à puce, le procédé comprenant les étapes de :
- sélection (48) d'au moins une application partagée par le terminal (10) et le support de paiement (2);
- initialisation (50) de l'application sélectionnée, l'initialisation (50) comportant la transmission depuis le support de paiement (2) vers le terminal (10) d'au moins un pointeur vers un enregistrement d'un fichier élémentaire mémorisé dans la puce du support de paiement (2);
- lecture (52) dans le terminal (10) des données de chaque enregistrement pointé ; et
- poursuite de l'application sélectionnée en utilisant une partie au moins des données lues,
dans lequel un premier pointeur vers un enregistrement d'un premier fichier élémentaire (26) contenant un numéro de compte primaire PAN est transmis au terminal (10) dans l'initialisation d'une application de paiement,
**caractérisé en ce qu'**un deuxième pointeur vers un enregistrement d'un deuxième fichier élémentaire (28) contenant un identifiant de support de paiement (2) différent du numéro de compte primaire PAN est en outre transmis au terminal (10) dans l'initialisation de ladite application de paiement.

2. Procédé selon la revendication 1, dans lequel le premier fichier élémentaire (26) et le deuxième fichier élémentaire (28) sont distincts.

3. Procédé selon la revendication 1 ou 2, dans lequel les enregistrements ont un format de type étiquette-longueur-valeur, une étiquette prédéterminée étant réservée au dit identifiant de support de paiement (2).

4. Procédé selon la revendication 3, dans lequel l'étiquette prédéterminée est inscrite dans une liste de données utilisée pour la génération d'un certificat de transaction de l'application de paiement.

5. Procédé selon l'une quelconque des revendications précédentes, dans lequel le pointeur vers l'enregistrement du deuxième fichier élémentaire (28) est transmis au terminal (10) dans l'initialisation d'une application différente d'une application de paiement.

6. Procédé selon l'une quelconque des revendications précédentes, dans lequel l'identifiant est associé à un organisme émetteur (8) et à l'identité de l'utilisateur du support de paiement (2) au niveau de l'organisme émetteur (8).

7. Procédé selon l'une quelconque des revendications précédentes, dans lequel l'identifiant est un code de type GSRN ou SGTIN.

8. Procédé selon l'une quelconque des revendications précédentes, dans lequel l'identifiant est un numéro de téléphone.

9. Support de paiement (2) à puce, comprenant une interface de communication (20) avec un terminal (10), et une mémoire (22) où sont stockées des informations respectives concernant au moins une application supportée par le support de paiement (2),
dans lequel les informations stockées pour une application comprennent un fichier de répertoire d'application (24) et des fichiers élémentaires (26,28) contenant des enregistrements,
dans lequel le fichier de répertoire d'une application (24) contient un localisateur de fichiers d'application (30) pointant vers au moins un enregistrement d'un fichier élémentaire, le localisateur de fichiers d'application (30) étant transmis via l'interface de communication (20) à un terminal (10) partageant ladite application lors d'une initialisation de ladite application afin que le terminal (10) lise chaque enregistrement pointé,
dans lequel le support de paiement (2) supporte une application de paiement pour laquelle le localisateur de fichiers d'application (30) pointe d'une part vers un enregistrement d'un premier fichier élémentaire (26) contenant un numéro de compte primaire PAN et d'autre part vers un enregistrement d'un deuxième fichier élémentaire (28) contenant un identifiant de support de paiement (2) différent du numéro de compte primaire PAN.
